# EUROPÄISCHE PATENTSCHRIFT

(11) **EP 3 281 512 B1**
(45) Veröffentlichungstag und Bekanntmachung des Hinweises auf die Patenterteilung: **27.01.2021**
(21) Anmeldenummer: 17184796.5
(22) Anmeldetag: 03.08.2017
(51) Int. Cl.: A01D 45/06, A01D 45/30

(54) **VERFAHREN UND VORRICHTUNG ZUM ERNTEN VON HANFGEWÄCHSEN UND DERGLEICHEN**
METHOD AND DEVICE FOR HARVESTING OF HEMP CROPS AND THE LIKE
PROCÉDÉ ET DISPOSITIF DE RÉCOLTE DE CHANVRE OU SIMILAIRES

(30) Priorität: 05.08.2016 DE 102016009715; 05.08.2016 DE 202016004904 U
(43) Veröffentlichungstag der Anmeldung: 14.02.2018
(73) Patentinhaber: Wieker, Heinrich, 31303 Burgdorf (DE)
(72) Erfinder: Wieker, Heinrich, 31303 Burgdorf (DE)
(74) Vertreter: Horak, Michael

(56) Entgegenhaltungen:
- EP-A1- 1 495 665
- EP-A1- 2 556 740
- WO-A1-2006/031174
- WO-A1-2007/133098
- FR-A- 1 196 123
- FR-A1- 2 866 516
- FR-A1- 2 989 552
- US-A- 5 632 135

## Beschreibung

Die vorliegende Erfindung betrifft ein Verfahren und eine Vorrichtung zum Ernten von Pflanzen gehörend zur Familie der Hanfgewächse (Cannabaceae), insbesondere der Gattung Hanf.

Pflanzen aus der Familie der Hanfgewächse (Cannabaceae) sowie einige Getreidesorten lassen sich aufgrund Ihres langen, sehr widerstandsfähigen Stängels meist sehr schwierig ernten. Des Weiteren können alle Pflanzenteile für die Verarbeitung von oder Verwendung in anderen Produkten verwendet werden, sodass eine Trennung der einzelnen Pflanzenteile von Vorteil ist.

Die vorliegende Erfindung betrifft daher ein Verfahren und eine Vorrichtung zum Ernten von Pflanzen gehörend zur Familie der Hanfgewächse (Cannabaceae), insbesondere der Gattung Hanf, mit welcher die Ernte und Trennung der einzelnen Pflanzenteile ermöglicht wird.

### Hintergrund

Bei Pflanzen, die zur Familie der Hanfgewächse (Cannabaceae), insbesondere der Gattung Hanf, gehören, steigt die Nachfrage stetig an, da Hanfgewächse aufgrund Ihrer Eigenschaften, beispielsweise der stark faserigen Stängel, eine gefragte Nutzpflanze geworden sind. Die Hanffasern eignen sich beispielsweise zur Papierherstellung, Textilherstellung, sind aber auch als Baumaterial geeignet. Aus den Samen kann Öl gewonnen werden, das als Basis für die unterschiedlichsten Produkte dienen kann.

Die bislang bekannten Maschinen zum Ernten von Hanfgewächsen bestehen aus einer Vielzahl von übereinander angeordneten Schneidleisten, die den Hanf in einer festen Höhe schneiden. Bei diesen Verfahren fallen die abgeschnittenen Teile, die aus Stängel und Samen bestehen, auf den Boden. Erst in einem weiteren Schritt werden die am Boden befindlichen Stängel und Samen, zumeist händisch, gesammelt und voneinander getrennt.

Für die Getreidekultur sind Maschinen bekannt, die durch zwei Schnitte den Halm und das Korn voneinander trennen. Maschinen für die Getreidekultur sind jedoch nicht für die Ernte von Hanfgewächsen geeignet, da es sich bei Hanfgewächsen anders als bei Getreide um Pflanzen handelt, deren Stängel teilweise stark verzweigt ist und der, in Abhängigkeit von der Sorte, einen Durchmesser von 2 mm bis zu 60 mm erreichen kann. Die Stängel weisen außerdem teilweise sehr feste und widerstandsfähige Faserbündel auf, die bei den herkömmlichen Maschinen für die Getreidegewinnung zu Fehlfunktionen und Verstopfungen der Maschinen führen.

Der Erfindung liegt daher das technische Problem zugrunde, ein Verfahren und eine dazugehörige Vorrichtung zu schaffen, die es ermöglicht die Stängel der Hanfgewächse und die Blüten der Hanfpflanze gemeinsam zu ernten, diese jedoch in einem mechanischen Schritt voneinander zu trennen und zu sammeln.

Das erfindungsgemäße Verfahren und die Vorrichtung sollen somit eine einfache, verlustarme und kostengünstige Bergung der Stängel und der Blüten mit Körnern ermöglichen.

Das technische Problem wird durch die Ausführungsformen in den Ansprüchen gekennzeichnet und durch die Ausführungen in der Beschreibung und den Zeichnungen näher beschrieben.

### Zusammenfassung der Erfindung

Die vorliegende Erfindung betrifft ein Verfahren zum Ernten von Hanfgewächsen (Cannabaceae) und dergleichen, wobei die Stängel über dem Boden abgeschnitten und die Blüten der Hanfpflanze von den Stängeln gestrippt werden. Bei den Hanfgewächsen handelt es sich bevorzugt Pflanzen der Gattung Hanf.

Das erfindungsgemäße Verfahren ist dadurch gekennzeichnet, dass
(a) mindestens ein hinter einem Mähwerk angeordnetes Walzenpaar 7, das längs zur Fahrtrichtung angeordnet ist und sich in gegenläufiger Bewegung zueinander bewegt, die Hanfstängel nach unten zieht; und
(b) mindestens eine oberhalb des Walzenpaares 7 angeordnete Kettenführung 9 die Hanfstängel unterhalb der Blüten fasst und im Kettenspalt nach hinten zieht.

In einer Ausführungsform des Verfahrens, werden die Samen aus der Blüte herausgeschlagen. Dieses Herausschlagen erfolgt vorzugsweise durch eine Rüttelbahn.

Die Blüten werden in einem separaten Behälter aufgefangen. Neben dem Auffangbehälter für Blüten, werden die Blüten und die Samen der Pflanze vorzugsweise in separaten Behältern aufgefangen und somit getrennt.

In dem oben beschriebenen erfindungsgemäßen Verfahren werden die Hanfstängel 5 cm bis 50 cm über dem Boden abgeschnitten. Vorzugsweise werden die Hanfstängel 10 cm bis 40 cm, besonders bevorzugt 20 cm bis 30 cm über dem Boden abgeschnitten.

In dem Verfahren befindet sich mindestens ein Walzenpaar längs zur Fahrtrichtung hinter dem Mähwerk. Ein Walzenpaar besteht aus zwei Walzen, wobei sich bei einem Walzenpaar je eine Walze links und rechts der Fahrzeugmitte befindet. Die Walzen des Walzenpaares bewegen sich zueinander von oben zur Mitte hin, d.h. in Richtung Boden.

Die Erfindung betrifft weiterhin eine Vorrichtung gemäß Anspruch 6.

In einer bevorzugten Ausführungsform handelt es sich um Pflanzen der Gattung Hanf.

Das vorgelagerte angetriebene Mähwerk der erfindungsgemäßen Vorrichtung ist bevorzugt ein Balkenmesser. Dieses Balkenmesser ist in einer Höhe von 5 cm bis 50 cm, vorzugsweise 10 cm bis 40 cm, besonders bevorzugt 20 cm bis 30 cm über dem Boden angebracht. In einer Ausführungsform ist das Balkenmesser verstellbar angebracht. Über dem Mähwerk ist bevorzugt zusätzlich eine höhenverstellbare Haspel angebracht.

In einer Ausführungsform weist die erfindungsgemäße Vorrichtung einen Hanfeinlauf auf, der den Hanf zur Mitte der Vorrichtung bewegt.

In einer bevorzugten Ausführungsform umfasst die Vorrichtung mindestens ein Walzenpaar das sich hinterhalb des Mähwerk längs zur Fahrtrichtung befindet. Ein Walzenpaar besteht vorzugsweise aus zwei Walzen. Bei einer Vorrichtung bestehend aus einem Walzenpaar, befindet sich jeweils eine Walze links und eine Walze rechts der Fahrzeugmitte. Die einzelnen Walzen des Walzenpaares bewegen sich vorzugsweise zueinander von oben zur Mitte hin.

In einer besonders bevorzugten Ausführungsform umfasst die erfindungsgemäße Vorrichtung mindestens ein Abstreifkettenpaar. Das Abstreifkettenpaar fasst die Hanfstängel unterhalb der Blüten zwischen den Ketten und zieht sie im Kettenspalt nach hinten.

Die erfindungsgemäße Vorrichtung kann zusätzlich auch eine Rüttelbahn aufweisen. Die Rüttelbahn führt dazu, dass die Samen aus der Blüte herausgelöst werden.

### Beschreibung der Zeichnungen

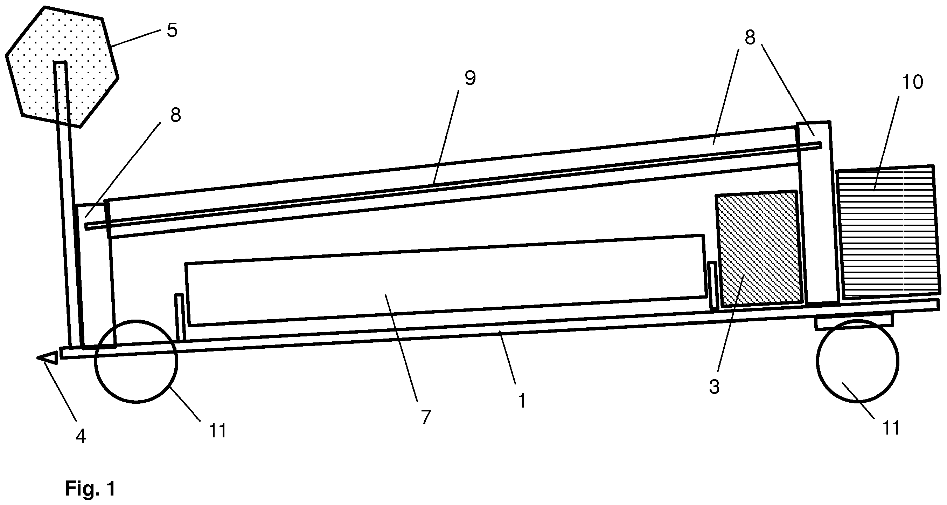

- Fig. 1: Darstellung der Vorrichtung - Seitenansicht Die Figur zeigt die Vorrichtung 1 zum Ernten von Hanfgewächsen mit den folgenden Merkmalen: Fahrwerk/Chassis 1, Energieerzeuger 3 (quer gestreift), Mähwerk 4, Haspel 5 (gepunktet), Walzenpaar 7, Kettentragegerüst 8, Abstreifkettenpaar 9, Auffangbehälter 10 (horizontal gestreift), Rad 11

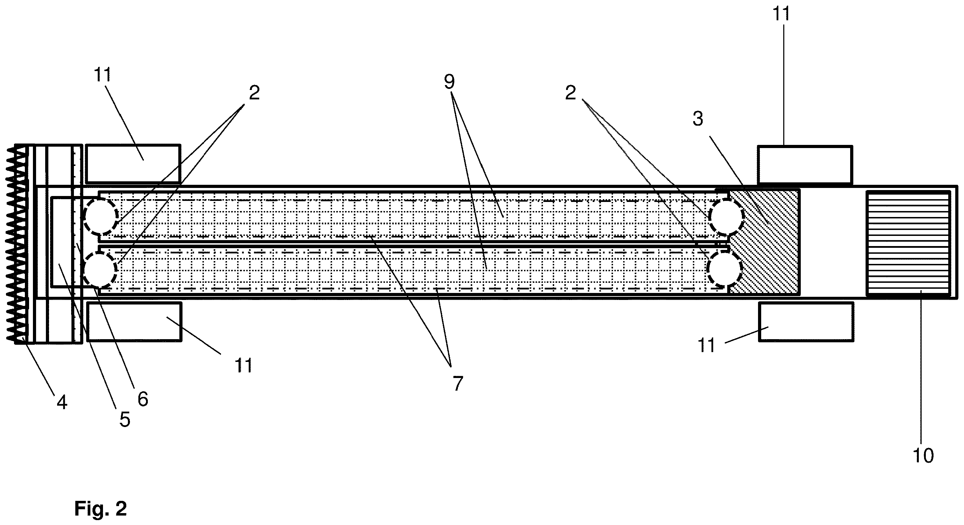

- Fig. 2: Darstellung der Vorrichtung - Draufsicht Kettenumlenkung 2 (gestrichelt dargestellt), Energieerzeuger 3 (quer gestreift), Mähwerk 4, Haspel 5 (gepunktet), Hanfeinlauf 6, Walzenpaar 7 (gestrichelt angedeutet, unterhalb des Abstreifkettenpaares 9 gelegen), Abstreifkettenpaar 9 (durch gepunktetes Rastermuster dargestellt), Auffangbehälter 10 (horizontal gestreift), Rad 11

### Detaillierte Beschreibung der Erfindung

Die vorliegende Erfindung betrifft im Wesentlichen ein Verfahren zum Ernten von Pflanzen aus der Familie der Hanfgewächse (*Cannabaceae*) und dergleichen, insbesondere der Gattung Hanf. Insbesondere betrifft die Erfindung ein Verfahren zum Ernten von Hanf, wobei die Hanfstängel über dem Boden abgeschnitten und die Blüten der Hanfpflanze von den Stängeln gestrippt werden. Bei dem Verfahren werden die Hanfstängel von einem Walzenpaar nach unten gezogen und die Blüten durch einen Kettenspalt nach hinten gezogen und dabei von den Stängeln gestrippt. Die Kettenführung fasst dabei die Hanfstängel unterhalb der Blüte und zieht diese im Kettenspalt nach hinten. Durch die rückwärts-gerichtete Bewegung der Kette wird die Blüte vom Hanfstängel gezogen.

Das Mähwerk 4 das zum Ernten der Hanfpflanzen verwendet wird, kann aus verschiedenen Schneidwerken bestehen, die je nach Hanfgewächs variieren können. Das Mähwerk 4, welches die Stängel über dem Boden abschneidet ist in einer bevorzugten Ausführungsform der vorliegenden Erfindung ein Balkenmesser. Das Messer befindet sich dabei bevorzugt im vorderen Bereich, besonders bevorzugt an der vordersten Stelle der Vorrichtung, sodass die Hanfgewächse durch dieses gleich zu Beginn des Erntevorgangs geschnitten werden können. Die Höhe in der die Messer angebracht sind variiert und liegt etwa in Höhe der Vorderachse. Die Hanfstängel können somit in verschiedenen Höhen abgeschnitten werden. In einer Ausführungsform werden die Hanfstängel 5 cm bis 50 cm über dem Boden abgeschnitten. Entsprechend verbleiben 5 cm bis 50 cm des Stängels im Boden. In einer bevorzugten Ausführungsform werden die Hanfstängel 10 cm bis 40 cm über dem Boden abgeschnitten. In einer besonders bevorzugten Ausführungsform werden die Stängel 20 cm bis 30 cm über dem Boden abgeschnitten.

Über dem Mähwerk 4 ist in einer Ausführungsform eine höhenverstellbare Haspel 5 angebracht. Diese hat die Aufgabe die oberen Teile der Hanfpflanzen zur Maschine hin zu streichen. Ihr Aufbau kann somit variieren. Beispiele für Haspeln die diesen Zweck erfüllen sind, jedoch nicht beschränkt, ein walzen-, spulen- oder kreuzförmiger Aufbau, der drehbar um eine Mittelachse gelagert ist. Dabei besitzt die Haspel 5 in einer bevorzugten Ausführungsform vier oder sechseckige Seitenteile und Streben dazwischen. Die Drehrichtung der Haspel 5 ist Oberseite in Fahrtrichtung vorlaufend, damit die oberen Teile der Hanfpflanzen zur Maschine hin gestrichen werden.

Hinter dem Mähwerk 4 angeordnet befinden sich Walzen 7, die als Walzenpaare 7 miteinander agieren und durch ihre gegenläufige Drehbewegung, zueinander hin die Hanfstängel der Hanfpflanzen nach unten ziehen. Die gegenläufige Drehung der einzelnen Walzen im Walzenpaar 7 ist dabei von oben zueinander, zum Boden hin. Von der Vorderseite der Vorrichtung bewegt sich bei einer Ausführung mit zwei Walzen, die linke Walze im Uhrzeigersinn und die rechte gegen den Uhrzeigersinn. In einer Ausführungsform sind die Walzenpaare 7 jeweils längs zur Fahrtrichtung ausgerichtet. In einer bevorzugten Ausführungsform wird ein Walzenpaar 7 verwendet, bei dem sich je eine Walzen sich links und rechts der Fahrzeugmitte befindet. In einer besonders bevorzugten Ausführungsform bewegen sich die Walzen des Walzenpaares 7 zueinander von oben zur Mitte hin zur Fahrzeugmitte. Die vorliegende Erfindung umfasst aber auch die Verwendung von mehreren Walzenpaaren 7.

Die verwendeten Walzenpaare 7 werden von einem Antrieb, der von einem Energieerzeuger 3 mit Energie versorgt wird, angetrieben. Bevorzugt handelt es sich um einen Frequenzumrichter der von einem gesteuerten Elektromotor angetrieben wird. Dieser erlaubt eine Bewegung der Walzen 7, die zueinander gegenläufig ist und von oben gesehen in Richtung Boden verläuft.

In einer bevorzugten Bauform können sämtliche Antriebe auch hydraulisch betrieben werden, wobei der Hydraulikdruck von einem Geräteträger (Traktor) erzeugt wird, der die Hanferntevorrichtung trägt. Bevorzugterweise wird die Erntevorrichtung an der vorderen Lastaufnahme des Traktors befestigt und die Hydraulik über Schnellverschlüsse an den Geräteträger angeschlossen. Vier Stützräder an der Hanferntevorrichtung sorgen dafür dass der Mähbalken nicht auf der Erde aufsetzt und machen die nicht angekoppelte Erntevorrichtung leicht über ebene Flächen verschiebbar.

Die einzelnen Walzen der Walzenpaare 7 werden mittels Federkraft oder Pneumatik aneinandergedrückt und ziehen die Hanfstängel nach unten. Die Hanfstängel bleiben durch die zueinander laufende Bewegung der beiden Walzen des Walzenpaares unter der Maschine liegen und bilden den Schwad.

Oberhalb eines Walzenpaares 7 befindet sich eine umlaufende Kette 9, die die Blüten vom Stängel strippt. In einer Ausführungsform befindet sich jeweils rechts und links der Walzenpaarmitte eine umlaufende Kette 9. Ist lediglich ein Walzenpaar 7 montiert befindet sich die umlaufende Kette 9 rechts und links der Maschinenmitte. Die Ketten 9 werden über federbelastete Kettenführungen auf einem Traggerüst 8 geführt und aneinandergedrückt. Dadurch werden die Hanfstängel unterhalb der Blüten zwischen den Ketten 9 gefasst und im Kettenspalt nach hinten gezogen. Aufgrund der gleichzeitigen Abwärtsbewegung der Stängel die durch die Walzen 7 erfolgt, kommt es zu einer Abstreifung der Blüten auf der Kette 9.

Das Gerüst 8, das das Kettenpaar 9 trägt besteht aus durchbiegesteifen Gerüsten, die in Längsrichtung montiert sind. In einer Ausführungsform ist das Kettentraggerüstpaar 8 im vorderen und hinteren Bereich der Vorrichtung montiert. In einer bevorzugten Ausführungsform umfasst das Kettentraggerüstpaar 8 je zwei vertikale Ständern und je eine horizontale Traverse. Die Traverse besteht aus Dreiecks-Gitterrohrelementen. In einer bevorzugten Ausführungsform bilden die beiden gegenüberliegenden Traversen zur Mitte hin eine Rinne. Durch die Rinne bzw. in der Rinne werden dabei die abgestreiften Blüten in den hinteren Teil gefördert.

In einer weiteren Ausführungsform werden die Samen zusätzlich aus der Blüte herausgelöst. Die Samen werden dabei vorzugsweise mechanisch aus den Blüten herausgeschlagen. Verschiedene Möglichkeiten des Herauslösens des Samens aus den Blüten sind aus der Getreidekultur bekannt, wie beispielsweise das Herausschlagen oder Herauswalzen. Die bekannten Verfahren zum Herauslösen des Samens ohne diesen zu schädigen, können in dem erfindungsgemäßen Verfahren verwendet werden. Eine Rüttelbahn stellt eine bevorzugte Möglichkeit der Herauslösung dar, da die Samen durch das Rütteln auf eine einfache Weise aus der Blüte gelöst werden, ohne dass sie geschädigt werden, was beispielsweise beim Herausschlagen der Fall sein könnte.

In einer bevorzugten Ausführungsform werden die Blüten in einem separaten Behälter 10 aufgefangen. Wird zusätzlich der Samen aus der Blüte herausgelöst, wird auch dieser vorzugsweise in einem separaten Behälter 10 aufgefangen. Alternativ können die Blüten und/oder Samen auch in einem Gitterwagen aufgefangen werden. Eine Trennung der Blüte vom Samen kann durch die Rüttelbahn erfolgen, eine Trennung ist aber auch oder zusätzlich per Hand und/oder mechanisch möglich, beispielsweise nach dem Prinzip des Windsichtens. Dabei wird mittels eines erzeugten Luftstroms der schwerere herausgelöste Samen von der Blüte getrennt und kann somit separiert werden.

Die vorliegende Erfindung betrifft weiterhin eine entsprechende Vorrichtung zum Ernten von Hanfgewächsen oder dergleichen. Vorzugsweise handelt es sich bei den Hanfgewächsen oder dergleichen um Pflanzen der Gattung Hanf.

Die Vorrichtung umfasst dabei ein Fahrwerk 1, das als Verbindung des Fahrgestells über die Räder zur Fahrbahn dient. Gängige Fahrwerke sind im Stand der Technik bekannt und können in der vorliegenden Vorrichtung verwendet werden. In einer bevorzugten Ausführungsform umfasst das Fahrwerk 1 einen Grundrahmen, eine angetriebene, starre Vorderachse und eine auf einem Drehschemel gelagerte, angetriebene Hinterachse.

Der Antrieb erfolgt, wie auch die Lenkung über gängige Verfahren. Bevorzugt sind beide Fahrantriebe durch Frequenzumrichter gesteuert. Die Lenkung erfolgt dabei in der gängigen Ausführungsform mit einem Stellmotor, der den Drehschemel positioniert. Die elektrische Energie für die Motoren 3, die die jeweiligen Bewegungen produzieren, wird bevorzugt durch einen 3-Phasen Drehstromgenerator mit einem Verbrennungsmotor als Antrieb erzeugt. Jedoch können auch Elektromotoren, Stirlingmotoren, Hydraulikmotoren als auch gasbetriebene Motoren verwendet werden, um die nötige Energie zu erzeugen.

In einer Ausführungsform kann die Vorrichtung auch als Anbaugerät an einen Traktor ausgeführt werden. Dabei erfolgt Lenkung und Antrieb durch den Geräteträger. Dieser kann einen Verbrennungsmotor oder einen Elektroantrieb besitzen. Die Erntevorrichtung verfügt dabei bevorzugt über keinen eigenen Energieerzeuger. In einer besonders bevorzugten Ausführungsform die Vorrichtung durch die Hydraulik des Geräteträgers angetrieben.

Die erfindungsgemäße Vorrichtung umfasst mindestens ein vorgelagertes angetriebenes Mähwerk 4, mindestens einen Hanfeinlauf 6, mindestens ein Walzenpaar 7 und mindestens ein Abstreifkettenpaar 9 und erlaubt dadurch die Ernte von Pflanzen aus der Familie der Hanfgewächse (*Cannabaceae*) und dergleichen, insbesondere der Gattung Hanf.

Durch die erfindungsgemäße Ausbildung der Vorrichtung werden die Hanfstängel über dem Boden durch das Mähwerk 4 abgeschnitten. Das Mähwerk 4 kann aus unterschiedlichen Schneidwerken bestehen, die auch in der Getreidekultur verwendet werden. Das Mähwerk 4, welches die Stängel über dem Boden abschneidet, ist in einer bevorzugten Ausführungsform der vorliegenden Erfindung ein Balkenmesser. Die Messerbalken befinden sich bevorzugt im vorderen Bereich der Vorrichtung. In einer besonders bevorzugten Ausführungsform an der vordersten Stelle der Vorrichtung. Die Messerbalken können in einer festen Höhe angebracht sein. Diese liegt in einer Ausführungsform in Höhe der Vorderachse, d. h. je nach Vorrichtung in einer Höhe zwischen 5 cm bis 50 cm, vorzugsweise 10 cm bis 40 cm besonders bevorzugt in einer Höhe von 20 cm bis 30 cm. Entsprechend werden die Hanfstängel 5 cm bis 50 cm über dem Boden abgeschnitten, wodurch 5 cm bis 50 cm des Stängels im Boden verbleiben können. In einer bevorzugten Ausführungsform werden die Hanfstängel 10 cm bis 40 cm über dem Boden abgeschnitten. In einer besonders bevorzugten Ausführungsform werden die Stängel 20 cm bis 30 cm über dem Boden abgeschnitten. Die Höhe in der die Messerbalken liegen kann jedoch auch variabel gestaltet sein, sodass die Messerbalken nicht fest angebracht sind, sondern je nach Wunsch und Hanfgewächs verstellbar angebracht sind.

Eine über dem Mähwerk 4 angebrachte Haspel 5 lehnt die Pflanze vorsichtig in Richtung der Vorrichtung, sodass die Blüten und Samen nicht auf das Feld zurückfallen. In einer bevorzugen Ausführungsform streicht die Haspel 5 die Pflanze in Richtung des nachfolgend angebrachten Walzenpaares und der Kettenführung, wo die Hanfstängel mit den Blüten gefasst werden und voneinander getrennt werden. Die Haspel kann einen walzen-, spulen- oder kreuzförmigen Aufbau besitzen, der drehbar um eine Mittelachse gelagert ist Die Haspel 5 ist jedoch nicht auf solche Ausführungen beschränkt. In einer bevorzugten Ausführungsform umfasst die Haspel 5 vier oder sechseckige Seitenteile und Streben dazwischen. Um den gewünschten Effekt zu erfüllen, dreht sich die Haspel 5 mit der Fahrtrichtung, sodass die oberen Teile der Hanfpflanzen zur Maschine hin gestrichen werden.

Nach dem Mähwerk 4 sind Walzen 7 angeordnet, die als Walzenpaar 7 miteinander agieren und durch ihre Bewegung, die zueinander gerichtet ist, die Hanfstängel der Hanfpflanzen nach unten ziehen. Die Bewegung der einzelnen Walzen im Walzenpaar 7 ist dabei zueinander in Richtung Boden. Die Walzenpaare 7 sind in einer Ausführungsform längs zur Fahrtrichtung ausgerichtet. In einer bevorzugten Ausführungsform wird ein Walzenpaar 7 verwendet, bei dem sich je eine Walzen sich links und rechts der Fahrzeugmitte befindet. In einer besonders bevorzugten Ausführungsform wird mindestens ein Walzenpaar 7 verwendet. Die vorliegende Erfindung umfasst aber auch die Verwendung von mehreren Walzenpaaren 7, die längs zur Fahrrichtung angeordnet sind. Bei einer Verwendung mehrerer Walzenpaare 7 agieren die einzelnen Walzenpaare 7 bevorzugt separat, ohne mit anderen Walzenpaaren 7 zu interagieren. Die Walzen werden bevorzugt von einem Frequenzumrichter gesteuerten Motor angetrieben. Dieser erlaubt eine Bewegung der Walzen. Der Antrieb ist jedoch nicht auf eine solche Ausführung beschränkt.

In einer bevorzugten Bauform werden die Walzen von einem Hydraulikmotor angetrieben, welcher von der Hydraulikpumpe eines Geräteträgers angetrieben wird. Dies gilt bei der Ausführung als Anbaugerät an einem Traktor ebenso für alle anderen Antriebe wie Kettenantrieb, Mähbalkenantrieb und Haspelmotor.

Die einzelnen Walzen der jeweiligen Walzenpaare 7 werden aneinandergedrückt und ziehen die Hanfstängel nach unten. Das Aneinanderdrücken erfolgt mittels Federkraft oder Pneumatik. Durch die Ziehbewegung, die in Richtung Boden verläuft, bleiben die Hanfstängel unter der Maschine liegen und bilden den Schwad.

Oberhalb eines Walzenpaares 7 befindet sich bei der erfindungsgemäßen Vorrichtung mindestens eine umlaufende Kette 9, die die Blüten vom Stängel strippt. Diese Kette ist bevorzugt als Kettenpaar 9 ausgebildet. In einer Ausführungsform befindet sich jeweils rechts und links der Walzenpaarmitte ein umlaufendes Kettenpaar 9. Ist lediglich ein Walzenpaar 7 montiert befindet sich die umlaufende Kette 9 rechts und links der Maschinenmitte. Erhöht sich die Anzahl der Walzen 7, erhöht sich die Anzahl der Abstreifkettenpaare 9 entsprechend. Federbelastete Kettenführungen, die die Ketten führen und gegeneinanderdrücken sind auf einem Traggerüst 8 angebracht. Die Bewegung der Ketten 9 erfolgt zum Vorrichtungsende hin, d.h. entgegen der Fahrtrichtung. Durch diese Bewegung des mindestens einen Abstreifkettenpaares 9 werden die Hanfstängel unterhalb der Blüten zwischen den Ketten 9 gefasst und im Kettenspalt nach hinten gezogen. Aufgrund der gleichzeitigen Abwärtsbewegung der Stängel durch die Walzen und der Rückwärtsbewegung des Abstreifkettenpaares 9, erfolgt die Abstreifung der Blüten auf der Kette.

Das Gerüst 8, das das Kettenpaar 9 trägt, besteht aus durchbiegesteifen Gerüsten die in Längsrichtung zur Fahrtrichtung montiert sind. In einer Ausführungsform ist das Kettentraggerüstpaar 8 im vorderen und hinteren Bereich der Vorrichtung montiert. In einer bevorzugten Ausführungsform umfasst das Kettentraggerüstpaar 8 je zwei vertikale Ständern und je eine horizontale Traverse. Die Traverse umfasst dabei Dreiecks-Gitterrohrelementen. In einer bevorzugten Ausführungsform bilden die beiden gegenüberliegenden Traversen zur Mitte hin eine Rinne. Durch die Rinne bzw. in der Rinne werden die abgestreiften Blüten in den hinteren Teil gefördert.

In einer weiteren Ausführungsform werden die Samen zusätzlich aus der Blüte herausgelöst. Die Samen werden dabei vorzugsweise mechanisch aus den Blüten herausgeschüttelt. Eine Möglichkeit ist ein Schüttler, der die Blüten durch Kurbelwellen in gegenseitig kreisende Bewegung versetzt und somit zur Rauslösung der Samen sorgt. Möglichkeiten des Herauslösens des Samens aus den Blüten sind aus der Getreidekultur bekannt, wie beispielsweise das Herausschlagen oder Herauswalzen und können auch in dieser Vorrichtung und dem entsprechenden Verfahren angewendet werden. Eine Rüttelbahn stellt eine bevorzugte Möglichkeit der Herauslösung dar, da die Samen durch das Rütteln auf eine einfache Weise aus der Blüte gelöst werden, ohne dass sie geschädigt werden, was beispielsweise beim Herausschlagen der Fall sein könnte. Je nach Anzahl der Walzenpaare und Kettenpaare 9 kann entweder eine größere Rüttelbahn verwendet werden um alle Blüten und Samen abzufangen oder mehrere nebeneinander liegende Bahnen. Eine Trennung von Blüte und Samen ist auch oder zusätzlich per Hand und/oder mechanisch möglich, beispielsweise nach dem Prinzip des Windsichtens. In dieser Ausführungsform wird der die Trennung alternativ oder zusätzlich durch einen leichten Luftstrom durchgeführt.

Die Blüten werden in einem separaten Behälter 10 aufgefangen. Sind mehrere Walzenpaare 7 und Abstreifkettenpaare 9 in einer Vorrichtung enthalten kann der Auffangbehälter 10 entsprechend in der Größe variieren, sodass er alle Blüten auffangen kann. Es können sich aber auch mehrere Auffangbehälter 10 nebeneinander und/oder hintereinander angeordnet, auf der Vorrichtung befinden. Wird zusätzlich der Samen aus der Blüte herausgelöst, wird auch dieser vorzugsweise in einem separaten Behälter 10 aufgefangen. Der Behälter 10 für den Samen befindet sich in diesem Fall vor dem Behälter 10 für die Blüten, da die schwereren Samen früher nach unten fallen. Alternativ können die Blüten und/oder Samen auch in einem Gitterwagen aufgefangen werden.

## Patentansprüche

1. Verfahren zum Ernten von Hanfgewächse (*Cannabaceae*) und dergleichen, vorzugsweise Pflanzen der Gattung Hanf, wobei die Hanfstängel über dem Boden abgeschnitten und die Blüten der Hanfpflanze von den Stängeln gestrippt werden, **dadurch gekennzeichnet, dass**
(a) mindestens ein hinter einem Mähwerk angeordnetes Walzenpaar 7, das längs zur Fahrtrichtung angeordnet ist und sich in gegenläufiger Bewegung zueinander bewegt, die Hanfstängel nach unten zieht; und
(b) mindestens eine oberhalb des Walzenpaares 7 angeordnete Kettenführung 9 die Hanfstängel unterhalb der Blüten fasst und im Kettenspalt nach hinten zieht.

2. Verfahren nach Anspruch, wobei die Samen aus der Blüte herausgeschlagen werden, vorzugsweise durch eine Rüttelbahn.

3. Verfahren nach Anspruch 1 oder 2, wobei die Blüten in einem Behälter 10 aufgefangen werden, vorzugsweise dass die Blüten und die Samen der Pflanze jeweils in separaten Behältern 10 aufgefangen werden.

4. Verfahren nach einem der Ansprüche 1-3, wobei die Hanfstängel 5 cm bis 50 cm, vorzugsweise 10 cm bis 40 cm, besonders bevorzugt 20 cm bis 30 cm über dem Boden abgeschnitten werden.

5. Verfahren nach einem der Ansprüche 1-4, wobei das Walzenpaar 7 aus zwei Walzen besteht, wobei sich je eine Walze links und rechts der Fahrzeugmitte befindet.

6. Vorrichtung zum Ernten von Hanf oder dergleichen, umfassend
mindestens ein vorgelagerten angetriebenen Mähwerk 4,
mindestens ein Hanfeinlauf 6, und mindestens einen im hinteren Bereich der Vorrichtung angeordneten Auffangbehälter 10 , **dadurch gekennzeichnet, dass**
(a) hinter dem Hanfeinlauf 6 und dem Mähwerk 4 mindestens ein Walzenpaar 7 angeordnet ist, das längs zur Fahrzeugmitte liegt und eine gegenläufige Bewegung zueinander aufweist;
(b) mindestens ein oberhalb des mindestens einen Walzenpaares 7 Abstreifkettenpaar 9 angeordnet ist, das eine rückwärtsgerichtete Bewegung ausführt.

7. Vorrichtung nach Anspruch 6, wobei
(a) das vorgelagerte angetriebene Mähwerk 4 ein Balkenmesser ist und sich 5 cm bis 50 cm, vorzugsweise 10 cm bis 40 cm, besonders bevorzugt 20 cm bis 30 cm über dem Boden befindet und wobei vorzugsweise über dem Mähwerk 4 eine höhenverstellbare Haspel 5 angebracht ist;
(b) der Hanfeinlauf 6 den Hanf zur Mitte der Vorrichtung bewegt;
(c) das Walzenpaar 7 aus zwei Walzen besteht, bei denen je eine Walze links und rechts der Fahrzeugmitte angeordnet ist und sich die Walzen zueinander von oben zur Mitte hin bewegen.; und
(d) das Abstreifkettenpaar 9 die Hanfstängel unterhalb der Blüten zwischen den Ketten 9 fasst und nach hinten im Kettenspalt zieht.

8. Vorrichtung nach Anspruch 6 oder 7, wobei die Vorrichtung eine Rüttelbahn aufweist, **dadurch gekennzeichnet, dass** die Samen aus der Blüte geschlagen werden.

## Claims

1. Procedure for the harvest of hemp growths (Cannabaceae) and similarities, preferably plants of the hemp specie, where hempstems are cut over the ground and the flowers of the hemp plant are stripped from the stems, is **characterized by**
a. at least one pair of rollers (7), arranged behind a mowing device, that is arranged parallel to the driving direction, and turns in counter-rotation, that pulls the hemp-stems downwards; and
b. at least one chain guide (9) on top of the rollers 7 that clamps the hemp stems below the flowers and pulls them backwards in the chain gap.

2. Procedure according to the claim, where the seeds are knocked out of the flower, preferably by a shaking conveyor or -device.

3. Procedure according to the claim 1 or 2, where the flowers are collected in a container (10) preferably so that flowers and seeds are collected each in different containers (10).

4. Procedure according to one of the claims 1 - 3, where the hemp stems are cut 5cm to 50 cm, preferably 10 cm to 40 cm and most preferably 20 cm to 30 cm above the ground.

5. Procedure according to one of the claims 1 - 4, where the pair of rollers (7) consists of two rollers, while one roller is located left and one roller right of the center of the device.

6. Device for the harvest of hemp and similarities, containing at least one mowing unit (4) located ahead, at least one hemp intake (6) and at least one container (10) located in the rear end, **characterized by**
a. at least one pair of rollers (7) that is located behind the hemp intake (6) and the mowing device (4), arranged parallel to the driving direction, and turns in counter-rotation
b. at least one pair of stripping chains (9), located above the pair of rollers (7), that executes a backwards directed movement.

7. Device according to claim 6, where
a. the located ahead and propelled mowing device (4) is a sickle bar and situated 5cm to 50 cm, preferably 10 cm to 40 cm and most preferably 20 cm to 30 cm above the ground.
b. the hemp intake (6) moves the hemp to the center of the device;
c. the pair of rollers (7) consists of two rollers, while one roller is located left and one roller right of the center of the device and the rollers turn towards each other from top to the center;
d. the pair of stripping chains (9) catch the hemp stems below the flowers between the chains and pull backwards in the chain gap.

8. Device according to claim 6 or 7, where the device contains a shaking conveyor, **characterized by** knocking the seeds out of the flowers.

## Revendications

1. Procédure de récolte des excroissances de chanvre (Cannabacées) et des similitudes, de préférence des plantes de l'espèce chanvre, où les tiges de chanvre sont coupées au-dessus du sol et les fleurs de la plante de chanvre sont arrachées des tiges, est **caractérisée par**
a. au moins une paire de rouleaux (7), disposés derrière un dispositif de fauche, qui est disposé parallèlement au sens d'entraînement, et tourne en contre-rotation, qui tire les tiges de chanvre vers le bas; et
b. au moins un guide-chaîne (9) au-dessus des rouleaux (7) qui serre les tiges de chanvre sous les fleurs et les tire vers l'arrière dans l'intervalle de chaîne.

2. Procédé selon la revendication, dans lequel les graines sont arrachées de la fleur, de préférence par un convoyeur ou un dispositif d'agitation.

3. Procédé selon la revendication 1 ou 2, dans laquelle les fleurs sont collectées dans un conteneur (10), de préférence, pour que fleurs et graines soient collectées dans des conteneurs différents (10).

4. Procédé selon l'une des revendications 1 à 3, dans lequel les tiges de chanvre sont coupées de 5 cm à 50 cm, de préférence de 10 cm à 40 cm et plus préférablement de 20 cm à 30 cm au-dessus du sol.

5. Procédé selon l'une des revendications 1 à 4, dans lequel la paire de rouleaux (7) se compose de deux rouleaux, tandis qu'un rouleau est situé à gauche et un rouleau à droite du centre du dispositif.

6. Dispositif pour la récolte du chanvre et des similitudes, contenant au moins un groupe de fauche (4) situé à l'avant, au moins une admission du chanvre (6) et au moins un conteneur (10) situé à l'extrémité arrière, **caractérisé par**
a. au moins une paire de rouleaux (7) qui est située derrière l'admission du chanvre (6) et le dispositif de coupe (4), disposés parallèlement au sens d'entraînement, et tournant en contre-rotation
b. au moins une paire de chaînes de dénudage (9), situées au-dessus de la paire de rouleaux (7), qui exécute un mouvement dirigé vers l'arrière.

7. Dispositif selon la revendication 6, dans lequel
a. le dispositif de coupe (4) situé en avant et propulsé est une barre de coupe et situé de 5 cm à 50 cm, de préférence de 10 cm à 40 cm et, plus préférablement, de 20 cm à 30 cm au-dessus du sol.
b. l'admission chanvre (6) déplace le chanvre vers le centre du dispositif;
c. la paire de rouleaux (7) se compose de deux rouleaux, tandis qu'un rouleau est situé à gauche et un rouleau à droite du centre de l'appareil et les rouleaux tournent l'un vers l'autre de haut en bas;
d. la paire de chaînes d'arrachage (9) attrape les tiges de chanvre sous les fleurs, entre les chaînes, et tire vers l'arrière dans l'espace de chaîne.

8. Dispositif selon la revendication 6 ou 7, dans lequel le dispositif contient un convoyeur à secousses, **caractérisé par** l'expulsion des graines, hors des fleurs.
